# DEMANDE DE BREVET EUROPEEN

(11) **EP 0 740 401 A1**
(43) Date de publication de la demande: **30.10.1996**
(21) Numéro de dépôt: 96106615.6
(22) Date de dépôt: 26.04.1996
(51) Int. Cl.: H02K 7/116, F16H 37/04

(54) **Motoréducteur, notamment pour un dispositif d'essuie-glace de véhicule automobile**

(30) Priorité: 27.04.1995 FR 9505192
(71) Demandeur: VALEO SYSTEMES D'ESSUYAGE, 78321 La Verrière (FR)
(72) Inventeur: Gagneux, Georges, 86100 Chatellerault (FR)
(74) Mandataire: Gamonal, Didier

(57) **Abrégé**

L'invention concerne un motoréducteur, notamment pour un dispositif d'essuie-glace de véhicule automobile, comportant un moteur électrique (1) logé dans une carcasse (3) dont l'arbre (7) du rotor (6) est apte à commander la rotation d'un arbre de sortie (32) par l'intermédiaire d'un ensemble réducteur de vitesse (2) logé dans un carter (4).

Selon l'invention, l'ensemble réducteur comporte au moins un premier dispositif d'engrenage réducteur (9), du type épicycloïdal, associé à un deuxième dispositif réducteur de vitesse (35), comprenant une vis sans fin (30), portée par un arbre (29), apte à s'engrener avec une roue dentée (31), liée en rotation avec l'arbre de sortie (32).

Application à tout type de motoréducteur.

## Description

La présente invention se rapporte à un motoréducteur, notamment pour un dispositif d'essuie-glace de véhicule automobile.

Un tel motoréducteur comporte habituellement un moteur électrique composé d'un rotor et d'un stator, l'arbre du rotor étant relié à un dispositif réducteur de vitesse qui entraîne un arbre de sortie du motoréducteur.

Le dispositif réducteur est souvent composé d'une vis sans fin portée par l'arbre du rotor, ladite vis sans fin entraînant une roue dentée qui est liée en rotation à l'arbre de sortie.

Un autre dispositif réducteur couramment utilisé, et notamment décrit dans le document FR-B-2 455 221, comporte deux vis sans fin portées par l'arbre du rotor, chaque vis sans fin s'engrenant avec un pignon intermédiaire, les deux pignons intermédiaires ayant leurs axes disposés de part et d'autre de l'arbre du rotor et étant solidaires chacun d'une roue intermédiaire, les deux roues intermédiaires s'engrenant avec une même roue solidaire de l'arbre de sortie du réducteur.

Or les motoréducteurs du type précité sont sollicités pour fournir des couples de plus en plus importants au niveau de l'arbre de sortie, en particulier pour entraîner des bras d'essuie-glace qui sont de plus en plus lourds en raison de l'augmentation de la surface des vitres à essuyer dans les véhicules automobiles. Il est donc nécessaire d'augmenter le rendement desdits motoréducteurs.

Pour cela, une première possibilité consiste à augmenter la puissance du moteur électrique, mais ceci se concrétise par une augmentation du volume et du poids dudit moteur électrique.

Comme ce type de motoréducteurs peut être utilisé pour l'essuyage d'une vitre arrière de véhicule automobile et, compte tenu de la place restreinte disponible pour l'installation d'un tel motoréducteur, une telle augmentation de volume ou de poids n'est pas admissible.

La présente invention a donc pour but de remédier à cet inconvénient en proposant un motoréducteur dans lequel le rendement du réducteur est augmenté pour pouvoir générer un couple de sortie important tout en ayant un volume restreint et une structure compacte.

Le motoréducteur selon l'invention, notamment pour un dispositif d'essuie-glace de véhicule automobile, comporte un moteur électrique, logé dans une carcasse, dont l'arbre du rotor est apte à commander la rotation d'un arbre de sortie par l'intermédiaire d'un ensemble réducteur de vitesse, logé dans un carter, caractérisé en ce que l'ensemble réducteur comporte au moins un premier dispositif d'engrenage réducteur, du type épicycloïdal, associé à un deuxième dispositif réducteur de vitesse, comprenant une vis sans fin, portée par un arbre, apte à s'engrener avec une roue dentée, liée en rotation avec ledit arbre de sortie.

Selon d'autres caractéristiques de l'invention,
- le premier dispositif d'engrenage réducteur du type épicycloïdal est coaxial avec l'arbre du moteur électrique;
- le premier dispositif d'engrenage réducteur comporte un pignon central, lié en rotation avec l'arbre du moteur, ledit pignon central s'engrenant avec au moins un pignon de satellite propre, d'une part à décrire une orbite autour de l'axe du moteur, et d'autre part à tourner autour d'une tige, parallèle à l'axe du moteur, ladite tige étant montée sur un porte-satellites qui peut tourner autour dudit axe;
- les dents du pignon central sont taillées dans la basse de l'arbre du moteur;
- le premier dispositif d'engrenage réducteur comporte trois satellites comprenant chacun deux pignons concentriques solidaires de diamètres différents;
- le porte-satellites comporte deux disques disposés de part et d'autre des satellites et dans lesquels sont emmanchés à force les tiges autour desquelles tournent les satellites;
- l'un des disque du porte-satellites est lié en rotation avec l'arbre portant la vis sans fin;
- ledit disque comporte un alésage central qui se prolonge axialement en une partie tubulaire, ladite partie tubulaire étant adaptée pour être emboîtée et emmanchée sur l'extrémité de l'arbre portant la vis sans fin;
- le premier dispositif d'engrenage réducteur comporte en outre une couronne à denture interne qui est montée fixe dans le carter de l'ensemble réducteur et dans laquelle est adapté à s'engrener le pignon de diamètre le plus petit de chaque satellite;
- la couronne comporte au moins un pied de fixation saillant radialement en étant entouré par au moins un manchon, ledit manchon étant maintenu serré axialement entre d'une part, un épaulement du carter et d'autre part au moins une patte issue d'un flasque palier disposé entre la carcasse du moteur et le carter de l'ensemble réducteur;
- chaque manchon est en un matériau élastique.

Cette dernière caractéristique permet d'assurer un maintien élastique de la couronne à denture interne dans le carter de l'ensemble réducteur et d'amortir ainsi les efforts radiaux et axiaux auxquels est soumise ladite couronne.

La Demanderesse a pu constater que le premier étage épicycloïdal de l'ensemble réducteur selon l'invention avait un rendement d'environ 93%, tandis que le deuxième étage composé d'une roue dentée et d'une vis sans fin avait un rendement d'environ 85%. Le rendement global de l'ensemble réducteur est donc d'environ 80% ce qui représente une réelle amélioration par rapport au rendement habituel d'un réducteur qui est de l'ordre de 30 %.

D'autres caractéristiques et avantages apparaîtront à la lecture de la description suivante en se référant aux dessins annexés parmi lesquels:
- la figure 1 est une vue en coupe d'un motoréducteur selon l'invention;
- la figure 2 est une vue en perspective éclatée du système de réduction du motoréducteur de la figure 1.

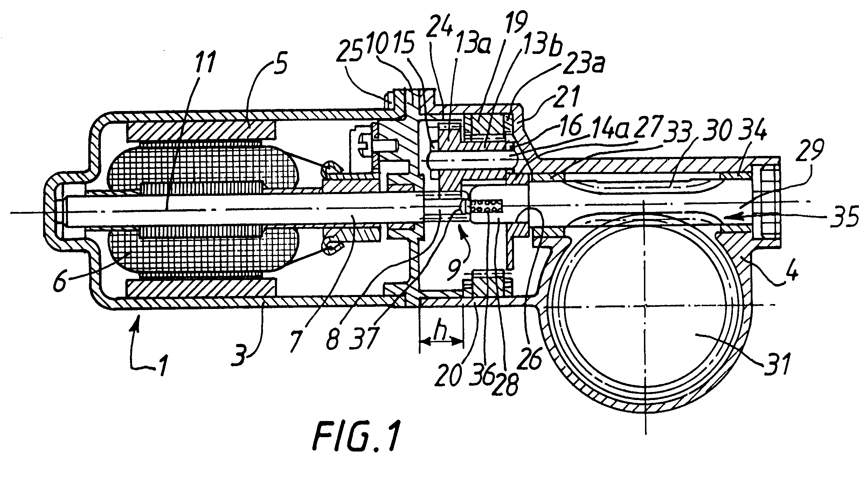

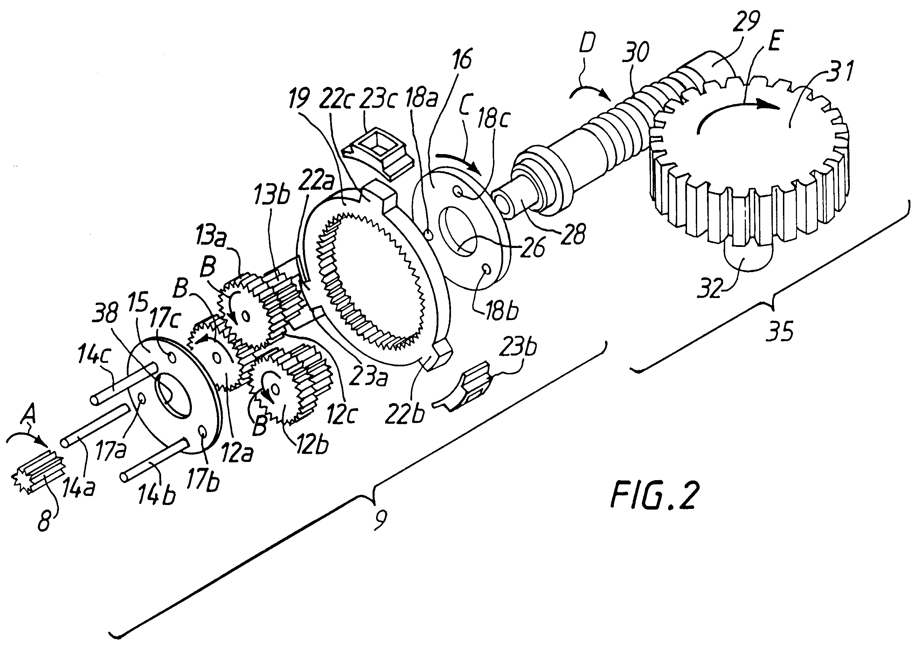

En se référant aux figures 1 et 2, le motoréducteur est composé d'un moteur électrique 1 logé dans une carcasse 3 et d'un ensemble réducteur 2 logé dans un carter 4 en forme de cuvette, sur lequel est rapportée la carcasse 3.

Le moteur électrique 1 comporte un stator 5 et un rotor 6 dont l'arbre 7 se prolonge, en traversant un flasque palier 10 situé entre la carcasse 3 et le carter 4, à l'intérieur dudit carter 4 du réducteur, en un pignon 8 dont les dents sont taillées dans la masse de l'arbre 7.

L'ensemble réducteur 2 comporte un dispositif d'engrenages 9 du type épicycloïdal dont l'axe est confondu avec l'axe du moteur 11 et qui est logé dans une partie cylindrique 20 du carter 4.

Le dispositif 9 comprend le pignon 8 déjà décrit, situé à l'extrémité de l'arbre du moteur 7, et tournant autour de l'axe 11 précité, à la vitesse de rotation du rotor 6 du moteur.

Le dispositif 9 comprend également trois satellites 12a, 12b, 12c, comportant chacun deux pignons concentriques solidaires 13a et 13b, de diamètres différents, le pignon de plus grand diamètre 13a comportant un nombre de dents supérieur à celui du pignon de diamètre plus petit 13b.

Les trois satellites sont décalés angulairement de 120° l'un par rapport à l'autre de manière à être régulièrement répartis autour de l'axe 11. Chaque satellite est propre à décrire une orbite autour de l'axe principal 11 et, d'autre part à tourner autour d'une tige 14a - 14c dont l'axe est parallèle à l'axe 11.

Les tiges 14a - 14c formant les axes des satellites sont montées sur un porte-satellites comportant deux disques 15 et 16, d'axes confondus avec l'axe 11, et disposés de part et d'autre des satellites. Les tiges 14a - 14c sont emmanchées à force, d'une part dans des alésages 17a - 17c du disque 15, et d'autre part dans des alésages 18a - 18c du disque 16, de manière à ce que les satellites soient maintenus serrés entre les deux disques formant le porte-satellites.

Le disque 15 comporte un alésage central 38 destiné au passage du pignon 8 qui vient s'engrener avec les pignons 13a des satellites.

Le porte-satellites peut ainsi tourner autour de l'axe 11, avec une vitesse angulaire correspondant à la vitesse angulaire orbitale des satellites.

Le dispositif 9 comprend en outre une couronne 19 à denture interne qui est montée fixe dans la partie cylindrique 20 du carter 4.

La couronne 19 est pourvue de trois saillies radiales formant des pieds de fixation 22a - 22c. Des manchons 23a - 23c en matériau élastique, par exemple en caoutchouc, et ayant la forme générale de parallélépipède rectangle creux, sont disposés de manière à entourer chacun un des pieds de fixation 22a - 22c de la couronne 19.

La couronne 19 munie des manchons 23a - 23c est disposée dans la partie cylindrique 20 de telle sorte que les manchons soient placés dans des alvéoles (non représentées) de ladite partie cylindrique 20 du carter, de manière à être bloqués en rotation par rapport au carter 4.

Les manchons sont maintenus serrés axialement, entre, d'une part des épaulements 21 du carter et d'autre part des pattes 24 issues du flasque palier 10. La hauteur h desdites pattes 24 est adaptée de telle sorte que, lorsque le flasque palier 10 est monté serré entre la carcasse 3 du moteur et le carter 4 du réducteur, en étant maintenu au moyen de vis 25 par exemple, lesdites pattes 24 sont en appui sur les manchons 23a - 23c.

L'ensemble réducteur 2 comporte un deuxième dispositif de réduction de vitesse 35 comprenant un arbre 29, dont l'axe est confondu avec l'axe 11 de l'arbre 7 du moteur, ledit arbre 29 portant une vis sans fin 30. Cet arbre 29 est porté, par l'intermédiaire de deux paliers 33, 34, par le carter 4 du réducteur.

Le dispositif 35 comporte en outre une roue dentée 31 qui s'engrène avec la vis sans fin 30 précitée et qui est liée en rotation avec l'arbre de sortie 32 du réducteur, ledit arbre de sortie étant sensiblement perpendiculaire à l'axe 11 de l'arbre 7 du moteur.

Les deux dispositifs réducteurs 9 et 35 sont liés entre eux par l'intermédiaire du porte-satellites, et en particulier du disque 16. En effet, ledit disque 16 comporte un alésage central 26, qui se prolonge axialement en une partie tubulaire 27, ladite partie tubulaire étant adaptée pour être emboîtée et emmanchée à la presse sur l'extrémité 28 de l'arbre 29 portant la vis sans fin 30.

Dans la suite de la description, le fonctionnement de l'ensemble réducteur va être expliqué en détail en se référant plus particulièrement à la figure 2.

Quand le moteur tourne en sens horaire, le pignon 8 tourne également dans le sens horaire suivant la flèche A et il s'engrène avec les pignons de grand diamètre 13a des trois satellites 12a - 12c en faisant tourner chaque satellite dans le sens anti-horaire selon les flèches B.

Les pignons de petit diamètre 13b des trois satellites s'engrènent dans la denture interne de la couronne 19 qui est fixe, et impriment à l'ensemble des satellites, ainsi qu'au porte-satellites, un mouvement orbital dans le sens horaire suivant la flèche C, avec une vitesse de rotation nettement inférieure à celle de l'arbre moteur 7.

Le porte-satellites étant lié en rotation avec l'arbre portant la vis sans fin 29, celui-ci est entraîné dans le sens horaire suivant la flèche D, avec la même vitesse de rotation que celle du porte-satellites.

La vis sans fin 30 s'engrène avec la roue 31 en lui donnant un mouvement de rotation suivant la flèche E et avec une vitesse de rotation inférieure à celle de ladite vis sans fin.

L'arbre de sortie 32 du système a donc un sens de rotation qui est celui de la flèche E et une vitesse de rotation qui a été réduite à deux niveaux par rapport à la vitesse de rotation du moteur.

On peut voir sur la vue en coupe de la figure 1 qu'il existe un dispositif de rattrapage du jeu axial, entre l'arbre moteur 7 et l'arbre portant la vis sans fin 29, constitué par un ressort 36 situé dans un logement de l'extrémité 28 de l'arbre 29, ledit ressort appuyant sur une bille 37 située dans un creux de l'extrémité de l'arbre moteur 7. Ce dispositif permet en outre d'assurer un bon alignement entre l'arbre moteur 7 et l'arbre 29.

Il est bien entendu que le mode de réalisation ci-dessus décrit n'est aucunement limitatif et pourra donner lieu à toute modification désirable sans sortir pour cela du cadre de l'invention.

## Revendications

1. Motoréducteur, notamment pour un dispositif d'essuie-glace de véhicule automobile, comportant un moteur électrique (1) logé dans une carcasse (3) dont l'arbre (7) du rotor (6) est apte à commander la rotation d'un arbre de sortie (32) par l'intermédiaire d'un ensemble réducteur de vitesse (2) logé dans un carter (4), caractérisé en ce que l'ensemble réducteur comporte au moins un premier dispositif d'engrenage réducteur (9), du type épicycloïdal, associé à un deuxième dispositif réducteur de vitesse (35), comprenant une vis sans fin (30), portée par un arbre (29), apte à s'engrener avec une roue dentée (31), liée en rotation avec l'arbre de sortie (32).

2. Motoréducteur selon la revendication 1, caractérisé en ce que le premier dispositif d'engrenage réducteur (9) du type épicycloïdal est coaxial, selon un axe (11), avec l'arbre (7) du moteur électrique.

3. Motoréducteur selon l'une des revendications 1 ou 2, caractérisé en ce que le premier dispositif d'engrenage réducteur (9) comporte un pignon central (8), lié en rotation avec l'arbre (7) du moteur, ledit pignon central s'engrenant avec au moins un pignon (13a) de satellite (12a - 12c) propre, d'une part à décrire une orbite autour de l'axe (11) du moteur, et d'autre part à tourner autour d'une tige (14a - 14c), parallèle à l'axe (11), ladite tige étant montée sur un porte-satellites (15, 16) qui peut tourner autour dudit axe (11).

4. Motoréducteur selon la revendication 3, caractérisé en ce que les dents du pignon central (8) sont taillées dans la masse de l'arbre (7) du moteur.

5. Motoréducteur selon l'une des revendications 3 ou 4, caractérisé en ce que le premier dispositif d'engrenage réducteur (9) comporte trois satellites (12a - 12c) comprenant chacun deux pignons concentriques solidaires (13a, 13b) de diamètres différents.

6. Motoréducteur selon l'une des revendications 3 à 5, caractérisé en ce que le porte-satellites comporte deux disques (15, 16) disposés de part et d'autre des satellites (12a - 12c) et dans lesquels sont emmanchés à force les tiges (14a - 14c).

7. Motoréducteur selon la revendication 6, caractérisé en ce que l'un (16) des disques du porte-satellites est lié en rotation avec l'arbre (29) portant la vis sans fin (30).

8. Motoréducteur selon la revendication 7, caractérisé en ce que le disque (16) comporte un alésage central (26) qui se prolonge axialement en une partie tubulaire (27), ladite partie tubulaire étant adaptée pour être emboîtée et emmanchée sur l'extrémité (28) de l'arbre (29) portant la vis sans fin.

9. Motoréducteur selon l'une des revendications 5 à 8, caractérisé en ce que le premier dispositif d'engrenage réducteur (9) comporte en outre une couronne (19) à denture interne qui est montée fixe dans le carter (4) de l'ensemble réducteur et dans laquelle est adapté à s'engrener le pignon de diamètre le plus petit (13b) de chaque satellite.

10. Motoréducteur selon la revendication 9, caractérisé en ce que la couronne (19) comporte au moins un pied de fixation (22a - 22c) saillant radialement en étant entouré par au moins un manchon (23a - 23c), ledit manchon étant maintenu serré axialement entre d'une part, un épaulement (21) du carter (4) et d'autre part au moins une patte (24) issue d'un flasque palier (10) disposé entre la carcasse (3) du moteur et le carter (4) de l'ensemble réducteur.

11. Motoréducteur selon la revendication 10, caractérisé en ce que chaque manchon (23a - 23b) est en un matériau élastique.
